# EUROPEAN PATENT SPECIFICATION

(11) **EP 2 957 985 B1**
(45) Date of publication and mention of the grant of the patent: **07.06.2017**
(21) Application number: 15164206.3
(22) Date of filing: 20.04.2015
(51) Int. Cl.: G06F 1/32, G06F 1/26, G05F 3/02

(54) **CONTROL CIRCUIT AND CONTROL SYSTEM**
STEUERSCHALTUNG UND STEUERSYSTEM
CIRCUIT DE COMMANDE ET SYSTÈME DE COMMANDE

(30) Priority: 22.05.2014 US 201462001640 P; 19.01.2015 US 201514599553
(43) Date of publication of application: 23.12.2015
(73) Proprietor: MediaTek Inc., Hsin-Chu 300 (TW)
(72) Inventor: Jao, Che-Yuan, 300 Hsinchu City (TW); Chiang, Chen-Feng, 616 Chiayi County (TW)
(74) Representative: Hoefer & Partner Patentanwälte mbB

(56) References cited:
- EP-A2- 2 680 441
- US-A1- 2013 162 044
- US-A1- 2013 241 632

## Description

### Field of the Invention

The present application relates to a control circuit, and particularly relates to a control circuit that can apply different bias voltages corresponding to different standards.

### Background of the Invention

The present application relates to a control circuit, and particularly relates to a control circuit that can provide different bias voltages for a driving circuit included therein.

Document US 2013/0162044 A1 discloses a circuit diagram of four cascaded transistors under a first and a second configuration. In each case, the cascaded transistors are connected in sequence between a first and a second reference voltage rails (0 V and 3,3 V) with intermediate voltages selectively applied to generate 0 V and 3,3 V signals at a pad without exceeding Vgs-max (e.g., Vgs-max=2 V). The cascaded transistors include first and second PMOS transistors connected in sequence between the 3,3 V rail and the pad and first and second NMOS transistors connected in sequence between the pad and the 0 V rail. In the first signal configuration for driving the pad "LOW" (e.g., 0 V), the PMOS transistors are turned "OFF" by the respective application of gate voltages 3,3 V, 1,8 V to disconnect the 3,3 V supply and the pad. Therein, the NMOS transistors are turned "ON" by their respective gate voltages (1,8 V, 1,8 V) to connect the pad to ground. Conversely, in the second signal configuration for driving the pad "HIGH" (e.g., 3,3 V), the PMOS transistors are turned "ON" by their respective gate voltages (1,8 V, 1,8 V) to connect the 3,3 V supply and the pad. Therein, the NMOS transistors are turned "OFF" by the respective application of gate voltages 1,8 V, 0 V to disconnect the pad from ground. With conventional approaches for satisfying the Vgs-max requirement at power up, the 1,8 V power supply rail would be sequenced to come up before the 3,3 V power rail. In order to avoid the power sequencing requirement, an intermediate voltage generator may be included at each pad which generates an internal 1,8 V potential from the 3,3 V supply rail. Document US 2013/0162044 A1 further discloses an intermediate voltage generator which uses a multiplexer to selectively output an internal voltage provided by a voltage divider circuit or an external voltage provided from an external voltage rail under control of a power signal.

Document US 2013/0241632 A1 discloses a bias voltage generation circuit which generates a bias voltage to be supplied to a current source of a differential circuit through which a variable bias current flows. The bias voltage generation circuit comprises a first current source one end of which is connected to a first power source and a first transistor which is connected to the other end of the first current source. The bias voltage generation circuit further comprises a second transistor which is connected between the first transistor and a second power source and includes a control electrode connected to a control electrode of the first transistor. The bias voltage generation circuit further comprises a second current source one end of which is connected to the first power source and a third transistor which is connected to the other end of the second current source. The bias voltage generation circuit further comprises a fourth transistor which is connected between the third transistor and the second power source and includes a control electrode connected to the second current source. The bias voltage generation circuit further comprises a first output point which is connected to the control electrode of the first transistor and a control electrode of the third transistor and outputs a first bias voltage. The bias voltage generation circuit further comprises a second output point which is connected to the control electrode of the fourth transistor and the second current source and outputs a second bias voltage. The bias voltage generation circuit further comprises a bias voltage adjusting circuit which adjusts the first bias voltage in accordance with a control input.

Document EP 2 680 441 A2 discloses a data output driving circuit. The data output driving circuit comprises a reference voltage generator to compare a voltage corresponding to a high voltage with a power supply voltage autonomously without depending on an external control to variably generate a reference voltage as a bias voltage. The data output driving circuit further comprises a level shifter to shift input data to a swing level of the high voltage to output the shifted input data as a pull-up driving control voltage. The data output driving circuit further comprises a dynamic gate control unit to receive the high voltage and the reference voltage as an operation power supply and to generate pull-up and pull-down gate control voltages in response to voltage levels of an output node voltage, the pull-up driving control voltage and the input data. The data output driving circuit further comprises an output driver. The output driver comprises a pull-up driver including first, second and third transistors of a first conductivity type connected by a cascade structure between a voltage supply node and an output node. The output driver further comprises a pull-down driver including first, second and third transistors of a second conductivity type connected by a cascade structure between a ground node and the output node. The first, second and third transistors of the first conductivity type are PMOSFETs and the first, second and third transistors of the second conductivity type are NMOSFETs. Therein, gates of the first, second and third transistors of the first conductivity type receive the pull-up driving control voltage, the bias voltage and the pull-up gate control voltage, respectively. Further, gates of the first, second and third transistors of the second conductivity type receive the voltage level of the input data, the power supply voltage and the pull-down gate control voltage, respectively.

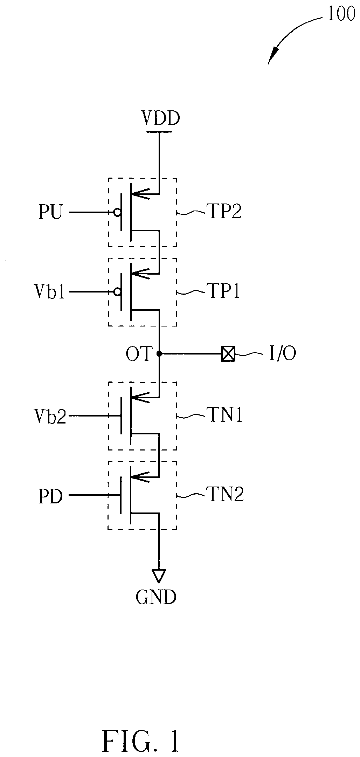

FIG.1 is a circuit diagram illustrating a conventional driving circuit 100. As illustrated in FIG.1, the driving circuit 100 comprises transistors TP1, TP2, TN1 and TN2, which are coupled in series and coupled to an input/output pad I/O. The transistor TP2 receives a pull up signal PU. If the pull up signal PU controls the transistor TP2 to be active, a voltage at the output terminal OT is pulled up. The transistor TP1 receives a bias voltage Vb1 to operate in a suitable state.

Similarly, the transistor TN2 receives a pull down signal PD. If the pull down signal PD controls the transistor TN2 to be active, a voltage at the output terminal OT is pulled down. The transistor TN1 receives a bias voltage Vb2 to operate in a suitable state.

However, the bias voltage Vb1 or Vb2 must be provided by another independent bias voltage source which may occupy more circuit regions. Also, the bias voltage is always a fixed value thus cannot meet different requirements.

### Summary of the Invention

This in mind, the present application aims at providing a control circuit that can provide different bias voltages to a driving circuit included therein.

This is achieved by a control circuit according to claim 1. The dependent claims pertain to corresponding further developments and improvements.
As will be seen more clearly from the detailed description following below, the claimed control circuit comprising a driving circuit which comprises a voltage adjusting circuit, a first transistor and a second transistor. The first and second transistors are PMOSFETs or NMOSFETs. The first transistor comprises: a first terminal being a drain terminal; a second terminal being a source terminal; and a control terminal being a gate terminal, for receiving a bias voltage generated from at least operating voltage of the control circuit. The second transistor comprises: a first terminal being a drain terminal, coupled to a second terminal of the first transistor; a second terminal being a source terminal, for receiving a first predetermined voltage; and a control terminal being a gate terminal, for receiving the control voltage. The control circuit further comprises a candidate voltage selecting circuit, for outputting one of a plurality of candidate voltages. The control circuit further comprises a multiplexer, for outputting one of the candidate voltages output from the candidate voltage selecting circuit and a ground voltage as the bias voltage. Therein, the candidate voltages are related with the operating voltage of the control circuit.

Also, a corresponding control system comprises a power managing IC, and a control IC. The power managing IC comprises a power providing terminal for providing a first predetermined voltage. The control IC comprises: at least one transistor; a power receiving terminal, for receiving the first predetermined voltage; and a bias voltage receiving terminal, for receiving a bias voltage generated from at least operating voltage of the control IC, wherein the bias voltage is applied to bias at least one transistor in the control IC.

Furthermore, a corresponding control system comprises a power managing IC and a control IC. The power managing IC comprises a power providing terminal for providing a first predetermined voltage. The control IC comprises: at least one transistor; a power receiving terminal, for receiving the first predetermined voltage; a core voltage receiving terminal, for receiving a core voltage; a core unit, receiving the core voltage; and a bias voltage generating circuit, for generating a bias voltage applied to bias the transistor in the control IC according to the core voltage. The bias voltage equals to the first predetermined voltage minus the core voltage.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG.1 is a circuit diagram illustrating a conventional driving circuit;
FIG.2 is a circuit diagram illustrating a control circuit according to an example;
FIG.3A, FIG.3B, FIG.4-FIG. 7 are circuit diagrams illustrating different examples for the example illustrated in FIG.2;
FIG.8 is a circuit diagram of an embodiment of the invention
FIG.9 and FIG.10 are examples for the driving circuit illustrated in FIG.2; and
FIG.11-FIG.16 are block diagrams illustrating the control system according to useful examples for understanding the present application.

### Detailed Description

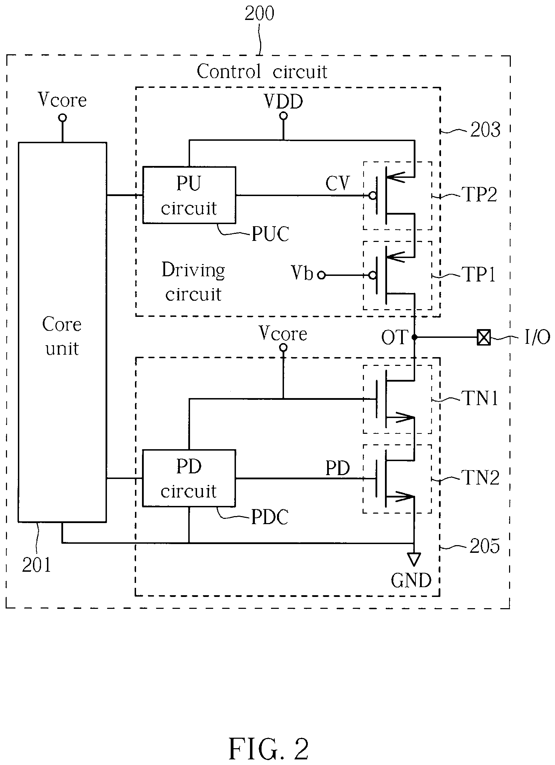

FIG.2 is a circuit diagram illustrating a control circuit 200 according to one example. As illustrated in FIG.2, the control circuit 200 comprises a core unit 201 and a driving circuit-205. The core unit 201, which receives and operates at a core voltage Vcore, is a device for higher speed operations and lower voltage operations. Accordingly, the core device can be applied as a circuit providing more functions, such as a controller. Comparing with an I/O (input/output) device applied for the input/output pad, the core unit has thinner oxides.

The driving circuit 203 is a pull up module in this example, which comprises a pull up circuit PUC (i.e. a voltage adjusting circuit) for generating a control voltage CV (i.e. the pull up signal PU in FIG.1), a transistor TP1 and a transistor TP2. The transistor TP1 and the transistor TP2 are PMOSFETs in this example. The transistor TP1 comprises: a first terminal (drain terminal) coupled to the input/output pad I/O; a second terminal (source terminal); and a control terminal (gate terminal) for receiving a bias voltage Vb generated from at least operating voltage of the control circuit 200. The transistor TP2 comprises: a first terminal (drain terminal), coupled to a second terminal of the first transistor TP1; a second terminal (source terminal), for receiving a predetermined voltage VDD; and a control terminal (gate terminal), for receiving the control voltage CV.

In one example, the predetermined voltage VDD meets one of following specs: DDR3, DDR3L, LPDDR3, DDR4, LPDDR4, GPIO. Corresponding to the spec, a value of the bias voltage Vb can equal to the core voltage Vcore, the predetermined voltage minus the core voltage VDD-Vcore, or a ground voltage GND. Please note either the core voltage Vcore, the predetermined voltage minus the core voltage VDD-Vcore or the ground voltage GND is an operating voltage of the control circuit 200. Accordingly, the bias voltage Vb is generated from the operating voltages of the control circuit 200.

The following table T1 depicts the examples of the predetermined voltage VDD and the bias voltage Vb corresponding to different specs. However, these values are only examples and do not mean to limit the scope of the present application.

**T1**

| VDD | Vb | Spec |
|---|---|---|
| 1.5V | VDD-Vcore | DDR3 |
| 1.35V | VDD-Vcore or GND | DDR3L |
| 1.2V | GND | LPDDR3/DDR4 |
| 1.1V | GND | LPDDR4 |
| 1.8V | Vcore | GPIO |

In this example, the control circuit 200 further comprises a pull down module 205 , which can be regarded as a driving circuit as well, comprising a pull down circuit PDC, which is also a voltage adjusting circuit, a transistor TN1 and a transistor TN2. The transistor TN1 and the transistor TN2 are NMOSFETs in this embodiment. Please note, in one embodiment, the transistor TN1 receives the core voltage Vcore for biasing. However, if the concept of the driving circuit 203 is applied to the pull down module 205, the voltage received by the control terminal of the transistor TN1 is replaced by a bias voltage generated from the operating voltages of the control circuit 200. In other examples, the driving circuit 203 may further comprise other circuits such as a level shifter or a buffer located between the core unit 201 and the pull up circuit PUC, or the pull down module 205 comprises other circuits such as a level shifter or a buffer located between the core unit 201 and the pull down circuit PDC. Such variation should also fall in the scope of the present application.

Please note, the driving circuit 203 is not limited to be applied to the control circuit illustrated in FIG.2. Accordingly, a driving circuit provided by the present application can be summarized as: A driving circuit, comprising a voltage adjusting circuit (ex. the pull up circuit PUC for a pull up module 203, or the pull down circuit PDC for the pull down module 205) for generating a control voltage CV, comprising a first transistor (ex. the transistor TP1 for a pull up module , or the transistor TN1 for the pull down module 205) and a second transistor (ex. the transistor TP2 for a pull up module , or the transistor TN2 for the pull down module 205). The first transistor comprises: a first terminal; a second terminal; and a control terminal, for receiving a bias voltage (ex.Vb) generated from at least operating voltage of the control circuit. The second transistor comprises: a first terminal, coupled to a second terminal of the first transistor; a second terminal, for receiving a predetermined voltage (ex. VDD); and a control terminal, for receiving the control voltage (ex. CV).

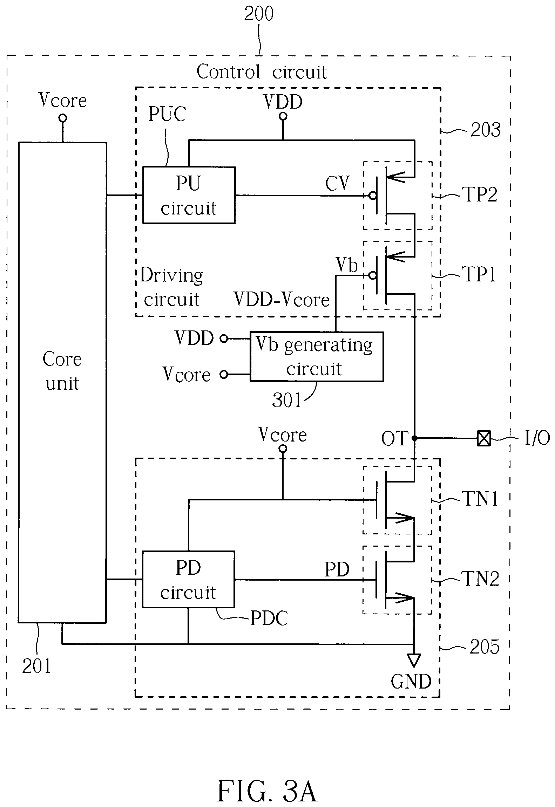

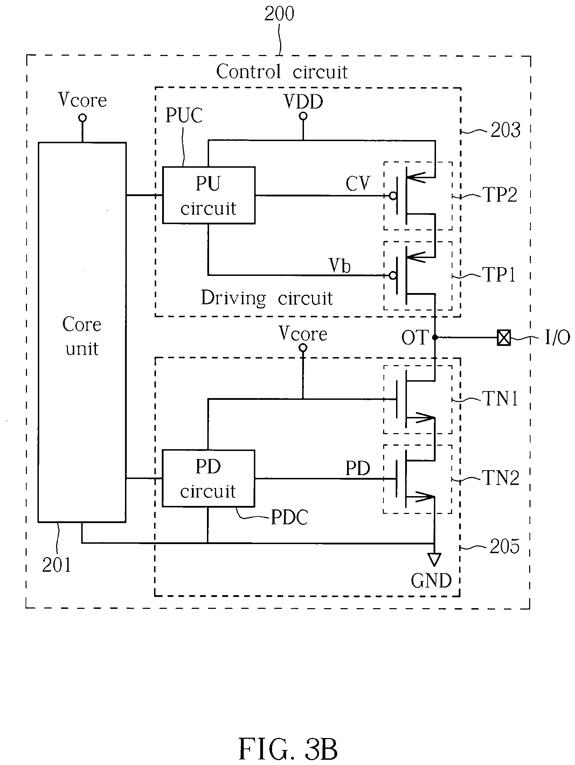

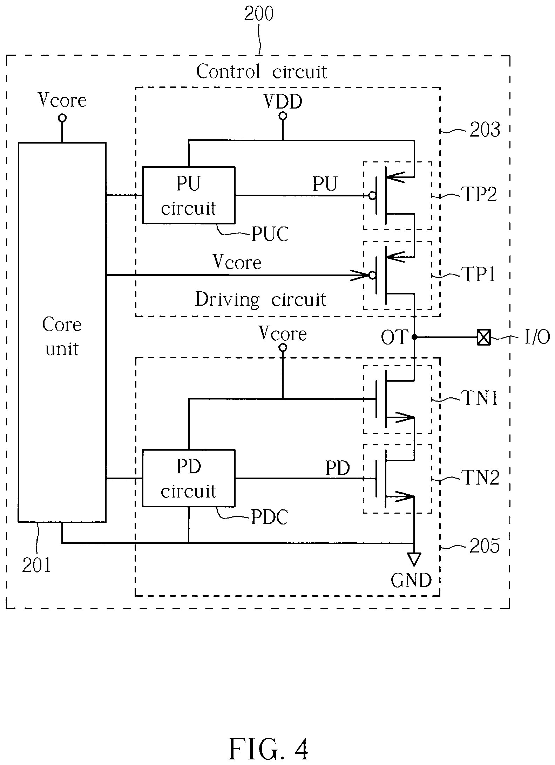

FIG.3A, FIG.3B, FIG.4-FIG.8 are circuit diagrams illustrating different examples for the example illustrated in FIG. 2. These examples illustrate how to provide required bias voltages. In the example of FIG.3A, a bias voltage generating circuit 301 is provided in the driving circuit 203. The biasing circuit receives the predetermined voltage VDD and the core voltage Vcore to generate a voltage equaling to the predetermined voltage minus the core voltage VDD-Vcore as a bias voltage Vb. The core voltage Vcore can come from the core unit 201 or an external source outside the control circuit 200. Please note the bias voltage generating circuit 301 can be incorporated into the pull up circuit PUC (i.e. the voltage adjusting circuit), as shown in FIG.3B. The structure in FIG. 3B can also provide a bias voltage Vb equaling to the core voltage Vcore. Please note if the bias voltage Vb equals to the core voltage Vcore, it can be directly from the core unit,as illustrated in FIG.4.

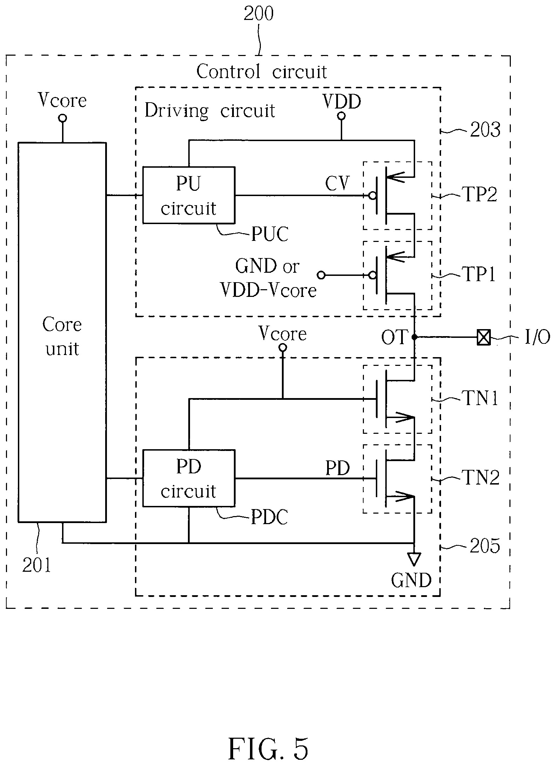

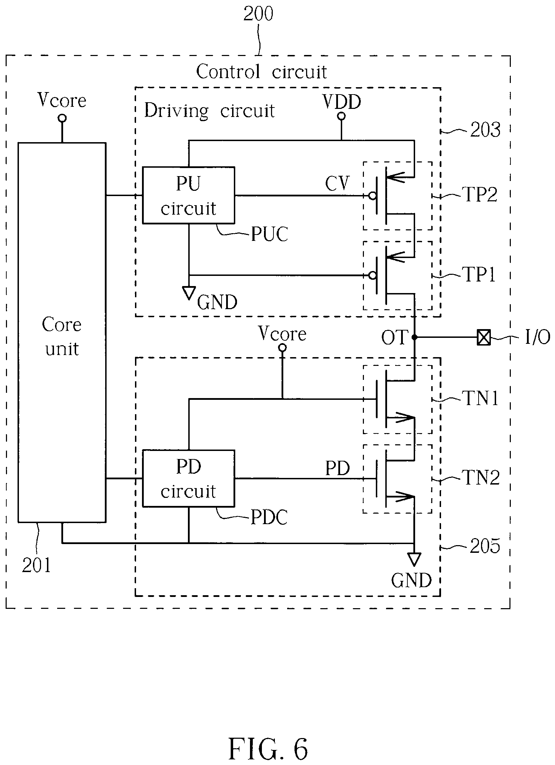

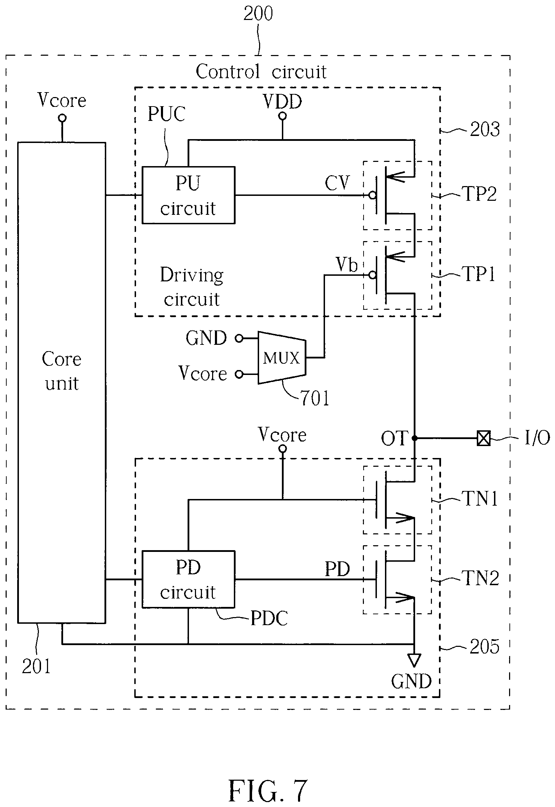

In the example of FIG.5, the bias voltage Vb is from an external source outside the control circuit 200, which will be described later. In such case, the bias voltage can equal to the ground voltage GND or VDD-Vcore. In the example of FIG.6, the bias voltage Vb equals to a ground voltage GND, and the pull up circuit PUC is also coupled to the ground voltage GND. In the example of FIG. 7, a multiplexer 701 is further provided in the driving circuit 203 to select a required bias voltage from a plurality of candidate voltages. In this example, candidate voltages are the ground voltage GND and the core voltage Vcore, but not limited.

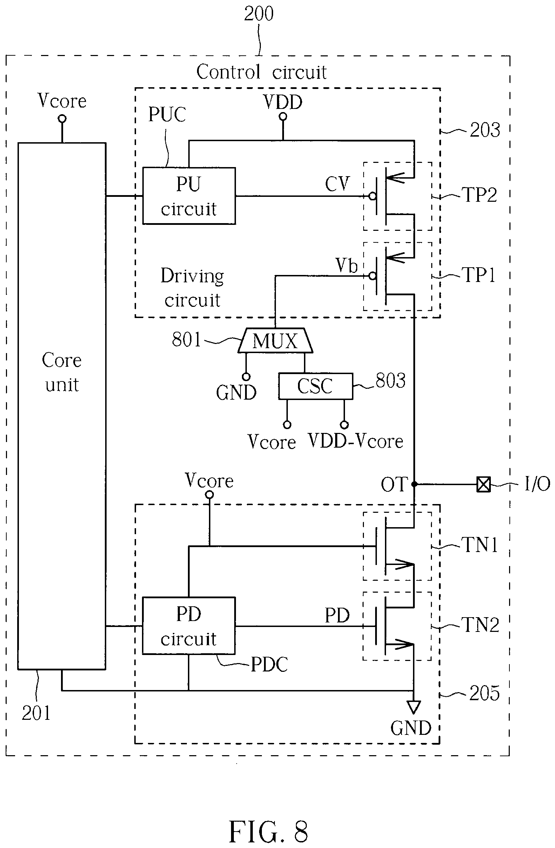

Further, in the embodiment of FIG.8, the driving circuit further comprises a multiplexer 801 and a candidate voltage selecting circuit 803. The candidate voltage selecting circuit 803 outputs one of a plurality of candidate voltages (in this example, the core voltage Vcore, and the predetermined voltage minus the core voltage VDD-Vcore). The multiplexer 801 outputs the candidate voltage output from the candidate voltage selecting circuit 803 and a second predetermined voltage (the ground voltage GND in this example) as the bias voltage Vb. It will be appreciated that the candidate voltages are also related with the operating voltage of the control circuit.

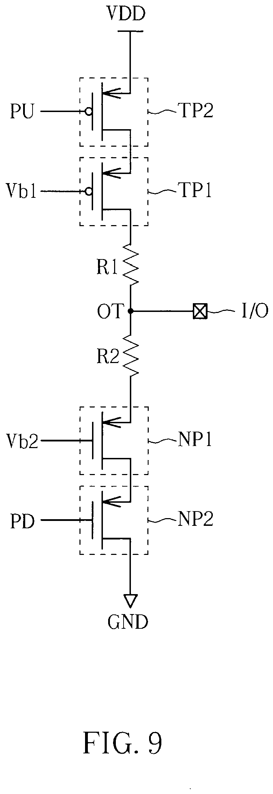

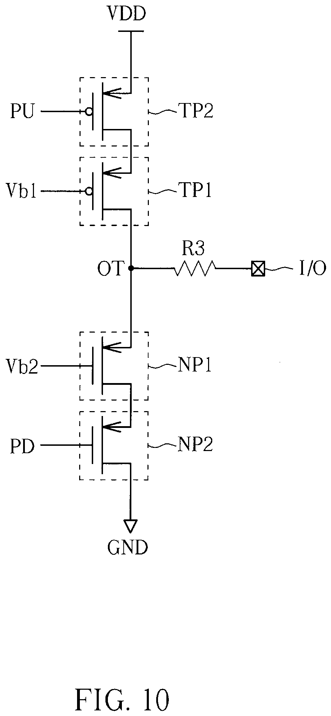

The structure for the driving circuit is not limited to above-mentioned embodiment FIG. 9 and FIG.10 are examples for the driving circuit illustrated in FIG.2. As shown in FIG.9, the driving circuit further comprises resistors R1 and R2, which are coupled in series and coupled to the input/output pad I/O. In the example of FIG.10, the driving circuit comprises a resistor R3 coupled between the output terminal OT and the input/output pad I/O. Such variation should also fall in the scope of the present application.

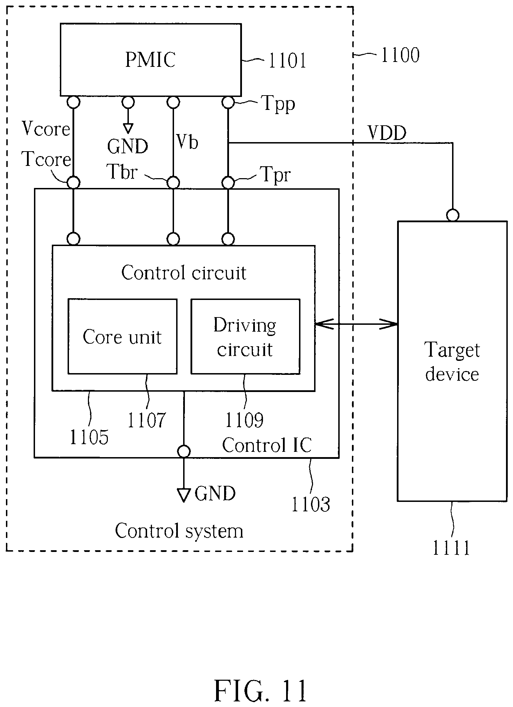

The following examples will depict the above-mentioned examples and embodiment in a system view. As illustrated in FIG.11, the control system 1100 comprises a power managing IC (integrated circuit) 1101 and a control IC 1103. The power managing IC 1101 comprises a power providing terminal Tpp for providing a predetermined voltage VDD. The control IC 1103, which is applied to control a target device 1111 (ex. a DRAM die), comprises: a power receiving terminal Tpr for receiving the predetermined voltage VDD; and a bias voltage receiving terminal Tbr, for receiving a bias voltage Vb generated from at least operating voltage of the control IC 1103. The bias voltage Vb is applied to bias at least one transistor (ex. the transistor Tp1 in FIG.2) in the control IC 1103.

In one example, the control IC 1103 comprises a control circuit 1105, which may comprise the same structure as which of the control circuit 200 in FIG.2. Accordingly, the control circuit 1105 receives the bias voltage Vb from the bias voltage receiving terminal Tbr and receives the predetermined voltage VDD from the power receiving terminal Tpr. In such an example, the control circuit 1105 can comprise a core unit 1107 (ex. a DRAM controller) and a driving circuit 1109, the same as the control circuit in FIG.2. The core unit 1107 can be the same as the core unit 201 in FIG.2, and the driving circuit 1107 can comprise a structure the same as which of the driving circuit 203 in FIG.2, but not limited. Also, the control IC 1103 can further comprise a core voltage receiving terminal Tcore to receive a core voltage Vcore from the power managing IC 1101 and transmits the core voltage Vcore to the control circuit 1105. Please note if the control IC 1103 does not comprise the core unit 1107, the core voltage receiving terminal Tcore can be omitted.

In the example of FIG. 11, the control IC 1103 receives the bias voltage Vb from the power managing IC 1101 (ex. the example in FIG.5). In such case, the bias voltage Vb can equal to the core voltage Vcore or the predetermined voltage minus the core voltage VDD-Vcore.

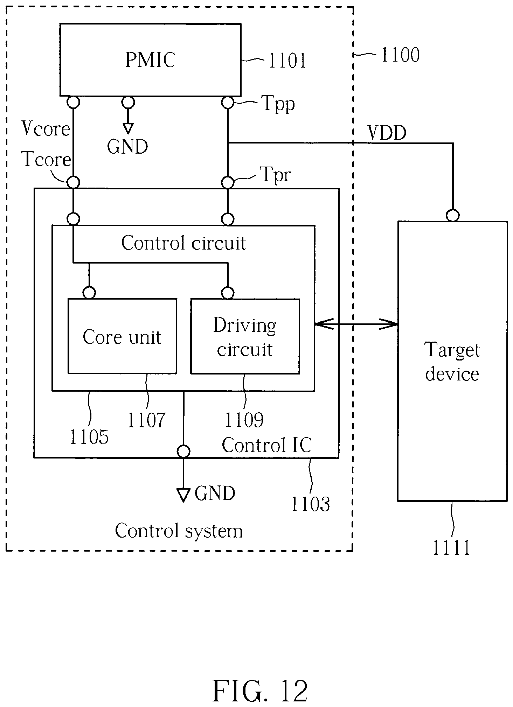

In the example of FIG.12, the control IC 1103 does not directly receive the bias voltage Vb from the power managing IC 1101. The power managing IC 1101 provides the core voltage Vcore to either the core unit 1107 or the driving circuit 1109 via the core voltage receiving terminal Tcore. In such case, the bias voltage can equal to the core voltage Vcore or the predetermined voltage minus the core voltage VDD-Vcore (ex. the example in FIG.3A or FIG.3B). In the case that the bias voltage equals to the core voltage Vcore (ex. the example in FIG.5), the core voltage receiving terminal Tcore can be regarded as a bias voltage receiving terminal. However, in the case that the bias voltage equals to the predetermined voltage minus the core voltage VDD-Vcore, a bias generating circuit such as 301 in FIG.3A is needed.

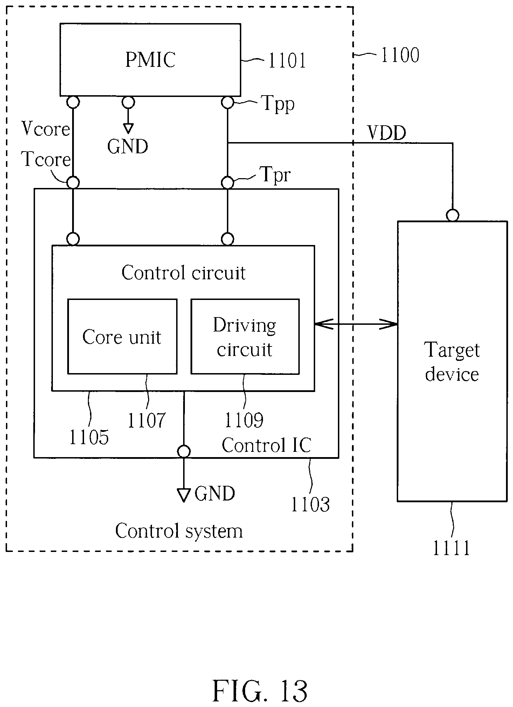

In the example of FIG.13, the control IC 1103 does not receive the bias voltage Vb from the power managing IC 1101. The power managing IC 1101 provides the core voltage Vcore to the core unit 1107 but not to the driving circuit 1109. In such case, the driving circuit 1109 receives the core voltage Vcore from the core unit 201 if needed. Also, the bias voltage can equal to the core voltage Vcore or the predetermined voltage minus the core voltage VDD-Vcore (ex. the example in FIG.3A or FIG.3B).In the case that the bias voltage equals to the core voltage Vcore, the core voltage Vcore is directly applied as the bias voltage from the core unit 1107. However, in the case that the bias voltage equals to the predetermined voltage minus the core voltage VDD-Vcore, a bias generating circuit such as 301 in FIG.3A is needed.

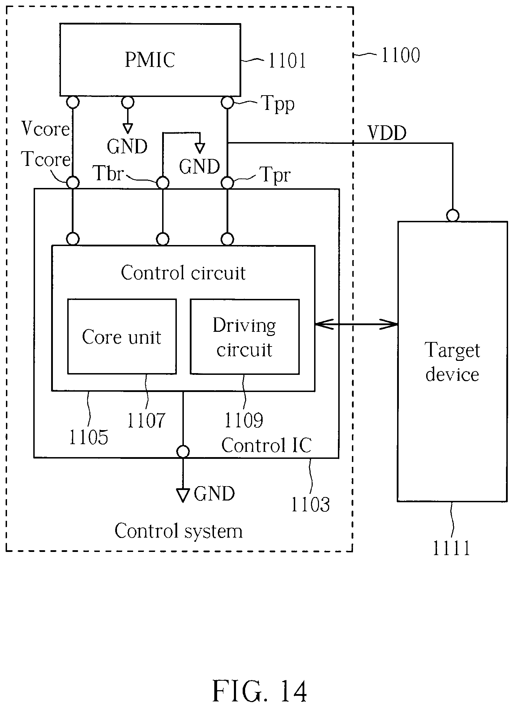

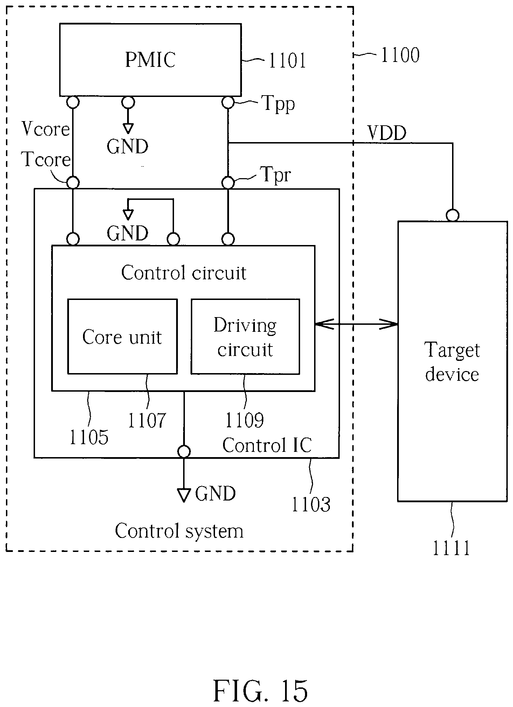

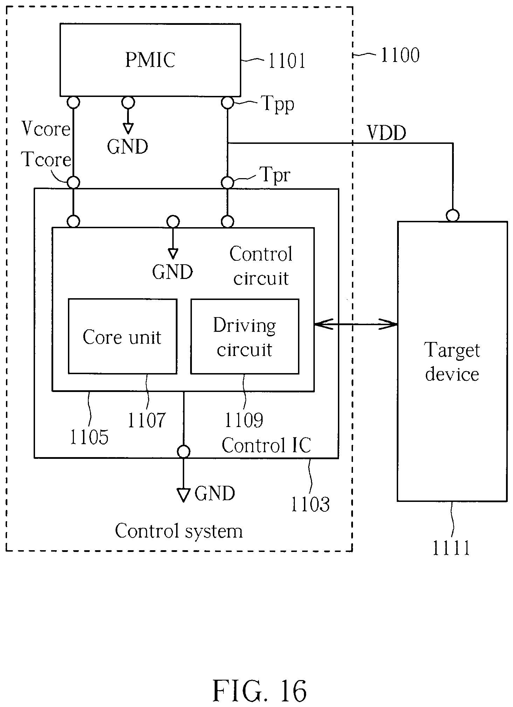

If the bias voltage equals to a ground voltage GND, the bias voltage receiving terminal Tbr can be coupled to a ground voltage source providing the ground voltage. In one example, the control system 1100 is provided on a circuit board, and the ground voltage source is located on the circuit board, as shown in FIG.14. Also, in one example, the driving circuit 1109 is provided in a silicon die, and the control IC 1103 is comprised in a package comprising the silicon die, the power receiving terminal Tpr and the bias voltage receiving terminal Tb. In such case, the ground voltage source can be located in the package and
outside the silicon die, as shown in FIG.15. Alternatively, the ground voltage source can be located in the silicon die, as shown in FIG.16.

The examples in FIG.11-FIG.16 can be applied to a 1.2v CMOS logic device, following JESD 76-1 spec, or HSIC USB 2.0 spec, but not limited.

In view of above-mentioned embodiments and examples, the driving circuit, the control circuit and the control system can provide bias voltages meeting different requirements, thus the applicability of the driving circuit, the control circuit and the control system is extended.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A control circuit (200), comprising:
a driving circuit (203, 205), comprising a voltage adjusting circuit (PUC, PDC) for generating a control voltage (CV) occurring on a voltage output terminal of the voltage adjusting circuit (PUC, PDC), comprising a first transistor (TP1, TN1) and a second transistor (TP2, TN2);
wherein the first and second transistors (TP1, TP2, TN1, TN2) are PMOSFETs (TP1, TP2) or NMOSFETs (TN1, TN2);
wherein the first transistor (TP1, TN1) comprises:
a first terminal being a drain terminal;
a second terminal being a source terminal; and
a control terminal being a gate terminal, for receiving a bias voltage (Vb) generated from at least one operating voltage of the control circuit (200);
wherein the second transistor (TP2, TN2) comprises:
a first terminal being a drain terminal, coupled to the second terminal of the first transistor (TP1, TN1);
a second terminal being a source terminal, for receiving a first predetermined voltage (VDD, GND); and
a control terminal being a gate terminal, coupled to the voltage output terminal of the voltage adjusting circuit (PUC, PDC) for receiving the control voltage (CV, PD); **characterized by**:
a core unit (201) receiving a core voltage (Vcore);
a candidate voltage selecting circuit (803), for outputting one of a plurality of candidate voltages; and
a multiplexer (801), for outputting one of the candidate voltages output from the candidate voltage selecting circuit and ground voltage (GND) as the bias voltage (Vb);
wherein the candidate voltages are related with the at least one operating voltage of the control circuit (200) and wherein the at least one operating voltage of the control circuit (200) comprises the core voltage and/or the first predetermined voltage (VDD) minus the core voltage (Vcore).

2. The control circuit (200) of claim 1, **characterized in that** the bias voltage (Vb) equals to the first predetermined voltage (VDD) minus the core voltage (Vcore) and the first predetermined voltage (VDD) minus the core voltage (Vcore) is one of the plurality of candidate voltages.

3. The control circuit (200) of claim 1, **characterized in that** the bias voltage (Vb) equals to the core voltage (Vcore) and the core voltage (Vcore) is one of the plurality of candidate voltages.

## Patentansprüche

1. Steuerschaltung (200), umfassend:
eine Treiberschaltung (203, 205), umfassend eine Spannungseinstellungsschaltung (PUC, PDC) zum Generieren einer Steuerspannung (CV), die an einem Spannungsausgabeanschluss der Spannungseinstellungsschaltung (PUC, PDC) auftritt, umfassend einen ersten Transistor (TP1, TN1) und einen zweiten Transistor (TP2, TN2);
wobei der erste und der zweite Transistor (TP1, TP2, TN1, TN2) PMOSFETs (TP1, TP2) oder NMOSFETs (TN1, TN2) sind;
wobei der erste Transistor (TP1, TN1) umfasst:
einen ersten Anschluss, der ein Drain-Anschluss ist;
einen zweiten Anschluss, der ein Source-Anschluss ist; und
einen Steueranschluss, der ein Gate-Anschluss ist, zum Empfangen einer Vorspannung (Vb), die aus wenigstens einer Betriebsspannung der Steuerschaltung (200) generiert ist;
wobei der zweite Transistor (TP2, TN2) umfasst:
einen ersten Anschluss, der ein Drain-Anschluss ist, der mit dem zweiten Anschluss des ersten Transistors (TP1, TN1) gekoppelt ist;
einen zweiten Anschluss, der ein Source-Anschluss ist, zum Empfangen einer ersten vordefinierten Spannung (VDD, GND); und
einen Steueranschluss, der ein Gate-Anschluss ist, der zum Empfangen der Steuerspannung (CV, PD) mit dem Spannungsausgabeanschluss der Spannungseinstellungsschaltung (PUC, PDC) gekoppelt ist;
**gekennzeichnet durch**:
eine Kerneinheit (201), die eine Kernspannung (Vcore) empfängt;
eine zum Auswählen einer Kandidatenspannung ausgebildete Schaltung (803) zum Ausgeben einer von einer Vielzahl von Kandidatenspannungen; und
einen Multiplexer (801) zum Ausgeben der der Kandidatenspannungen, die von der zum Auswählen einer Kandidatenspannung ausgebildeten Schaltung ausgegeben wird, oder Massespannung als die Vorspannung (Vb);
wobei die Kandidatenspannungen in Beziehung zu der wenigstens einen Betriebsspannung der Steuerschaltung (200) stehen und wobei die wenigstens eine Betriebsspannung der Steuerschaltung (200) die Kernspannung und/oder eine Differenz zwischen der ersten vordefinierten Spannung (VDD) und der Kernspannung (Vcore) umfasst.

2. Steuerschaltung (200) nach Anspruch 1, **dadurch gekennzeichnet, dass** die Vorspannung (Vb) gleich der Differenz zwischen der ersten vordefinierten Spannung (VDD) und der Kernspannung (Vcore) ist und die Differenz zwischen der ersten vordefinierten Spannung (VDD) und der Kernspannung (Vcore) eine der Vielzahl der Kandidatenspannungen ist.

3. Steuerschaltung (200) nach Anspruch 1, **dadurch gekennzeichnet, dass** die Vorspannung (Vb) gleich der Kernspannung (Vcore) ist und die Kernspannung (Vcore) eine der Vielzahl der Kandidatenspannungen ist.

## Revendications

1. Circuit de commande (200) comprenant :
un circuit d'attaque (203, 205) comprenant un circuit de réglage de tension (PUC, PDC) pour générer une tension de commande (CV) se produisant sur une borne de sortie de tension du circuit de réglage de tension (PUC, PDC), comprenant un premier transistor (TP1, TN1) et un deuxième transistor (TP2, TN2) ;
dans lequel les premier et deuxième transistors (TP1, TP2, TN1, TN2) sont des PMOSFET (TP1, TP2) ou des NMOSFET (TN1, TN2) ;
dans lequel le premier transistor (TP1, TN1) comprend :
une première borne étant une borne de drain ;
une deuxième borne étant une borne de source ; et
une borne de commande étant une borne de grille, pour recevoir une tension de polarisation (Vb) générée à partir d'au moins une tension de fonctionnement du circuit de commande (200) ;
dans lequel le deuxième transistor (TP2, TN2) comprend :
une première borne étant une borne de drain, couplée à la deuxième borne du premier transistor (TP1, TN1) ;
une deuxième borne étant une borne de source, pour recevoir une première tension prédéterminée (VDD, GND) ; et
une borne de commande étant une borne de grille, couplée à la borne de sortie de tension du circuit de réglage de tension (PUC, PDC) pour recevoir la tension de commande (CV, PD) ;
**caractérisé par** :
une unité de base (201) recevant une tension de base (Vcore) ;
un circuit de sélection de tension candidate (803), pour délivrer en sortie l'une d'une pluralité de tensions candidates ; et
un multiplexeur (801), pour délivrer en sortie l'une des tensions candidates délivrées en sortie à partir du circuit de sélection de tension candidate et la tension de masse (GND) comme étant la tension de polarisation (Vb) ;
dans lequel les tensions candidates sont liées à l'au moins une tension de fonctionnement du circuit de commande (200) et dans lequel l'au moins une tension de fonctionnement du circuit de commande (200) comprend la tension de base et/ou la première tension prédéterminée (VDD) moins la tension de base (Vcore).

2. Circuit de commande (200) de la revendication 1, **caractérisé en ce que** la tension de polarisation (Vb) est égale à la première tension prédéterminée (VDD) moins la tension de base (Vcore) et la première tension prédéterminée (VDD) moins la tension de base (Vcore) est l'une de la pluralité de tensions candidates.

3. Circuit de commande (200) de la revendication 1, **caractérisé en ce que** la tension de polarisation (Vb) est égale à la tension de base (Vcore) et la tension de base (Vcore) est l'une de la pluralité de tensions candidates.
